# EUROPEAN PATENT APPLICATION

(11) **EP 3 316 160 A1**
(43) Date of publication of application: **02.05.2018**
(21) Application number: 16817012.4
(22) Date of filing: 27.04.2016
(51) Int. Cl.: G06F 21/12

(54) **AUTHENTICATION METHOD AND APPARATUS FOR REINFORCED SOFTWARE**

(30) Priority: 29.06.2015 CN 201510366915
(71) Applicant: ZTE Corporation, Shenzhen, Guangdong 518057 (CN)
(72) Inventor: WANG, Wei, Shenzhen Guangdong 518057 (CN); DONG, Zhenjiang, Shenzhen Guangdong 518057 (CN); LI, Hui, Shenzhen Guangdong 518057 (CN); ZHANG, Wen, Shenzhen Guangdong 518057 (CN); ZHANG, Yateng, Shenzhen Guangdong 518057 (CN)
(74) Representative: Petit, Maxime
(86) International application number: PCT/CN2016/080384
(87) International publication number: WO 2017/000648

(57) **Abstract**

Disclosed are an authentication method and an authentication apparatus for reinforced software. The method includes: obtaining, after verification of a shell procedure of a reinforced software performed by a server succeeds, key data sent from the server, the key data including hidden data in a plain-text software code of the reinforced software and an entry address corresponding to the hidden data; and replacing, according to the hidden data and the entry address, corresponding data hidden in the plain-text software code of the reinforced software stored in a memory, and loading the plain-text software code.

## Description

### FIELD OF THE INVENTION

This disclosure relates to, but is not limited to, the field of Internet security technologies.

### BACKGROUND

In the existing technology, in an Android system, reinforcement may be made to an application software installation package correspondingly for the sake of safety, and accordingly, it is desired that all installation packages available in the market are reinforced installation packages. However, there are a wide variety of Android software markets in the existing technology, and a number of customized versions may exist for one software installation package release.

For a service of Android system, when it operates as a service of an application, a new process can be started or an existing process of the application can be used, thereby creating a service object. When another application invokes this service, specific service logics are accomplished by codes of this service object.

However, according to service providing manners of the Android system in the existing technology, after the service provides data to the application, the service cannot provide access protection to the data provided to the application. Even if the application provides a safety tip when accessing the data according to a service request, a user cannot definitely identify the source of the service request so that it cannot be guaranteed that the user can correctly deal with the safety tip. When a malicious application requests for the service, an effective protection cannot be provided. To avoid the installation and spread of unreinforced installation packages in the market, the application software generated based on the installation package needs to be authenticated.

### SUMMARY

The following is a summary of the subject matter described in detail herein. This summary is not intended to limit the scope of the appended claims.

There is provided an authentication method and apparatus for reinforced software in embodiments of the disclosure, which can not only effectively identify a source of a service request but also provide an effective protection when a malicious application requests for a service, thereby significantly improving the protection effect on the reinforced software, effectively preventing attacks by an attacker and ensuring normal operation of the reinforced software.

The embodiments of the disclosure can adopt the following technical schemes.

According to an embodiment of the disclosure, there is provided an authentication method for reinforced software, which is applicable to a mobile terminal, including steps of:
obtaining, after verification of a shell procedure of reinforced software performed by a server succeeds, key data sent from the server, the key data including hidden data in a plain-text software code of the reinforced software and an entry address corresponding to the hidden data; and
replacing, according to the hidden data and the entry address, corresponding data hidden in the plain-text software code of the reinforced software stored in a memory, and loading the plain-text software code.

Optionally, before the verification of the shell procedure of the reinforced software performed by the server succeeds, the method includes a step of:
calculating out an integrity check value of the shell procedure of the reinforced software, processing the integrity check value of the shell procedure, and sending a processing result obtained through the processing to the server to perform verification on the processing result through the server, wherein if the verification succeeds, the server encrypts the key data to generate encrypted data.

Optionally, the step of calculating out an integrity check value of the shell procedure of the reinforced software, processing the integrity check value of the shell procedure, and sending a processing result obtained through the processing to the server, includes steps of:
sending request information of the reinforced software to the server, receiving a first random number randomly generated according to the request information of the reinforced software by the server;
calculating out the integrity check value of the shell procedure of the reinforced software according to a first algorithm;
performing a first cascade processing on the first random number and the integrity check value of the shell procedure to obtain a first cascade result;
performing calculation on the first cascade result according to a second algorithm to obtain a first calculation result; and
performing a second cascade processing on the first calculation result and a second random number randomly generated by the reinforced software to obtain a processing result, and sending the processing result to the server

Optionally, the step of obtaining, after verification of a shell procedure of the reinforced software performed by a server succeeds, key data sent from the server, includes steps of:
decrypting the encrypted data sent from the server after the verification of the shell procedure of the reinforced software performed by the server succeeds; and
obtaining the key data sent from the server contained in decrypted data after the decryption is completed.

Optionally, the step of replacing, according to the hidden data and the entry address, corresponding data hidden in the plain-text software code of the reinforced software stored in a memory, and loading the plain-text software code, includes steps of:
locating a position, in the plain-text software code of the reinforced software, of the corresponding data hidden in the plain-text software code of the reinforced software according to the entry address; and
replacing the corresponding data hidden in the plain-text software code of the reinforced software stored in the memory with the hidden data, and loading the plain-text software code.

According to another aspect of the disclosure, there is also provided an authentication method for reinforced software, which is applicable to a server, including steps of:
obtaining a processing result sent from the reinforced software, and performing verification on an integrity check value of a shell procedure of the reinforced software; and
performing an encryption processing on key data and sending encrypted data generated through the encryption processing to the reinforced software if the verification succeeds, the key data including hidden data in a plain-text software code of the reinforced software and an entry address corresponding to the hidden data.

Optionally, the step of, according to a processing result sent from the reinforced software, performing verification on an integrity check value of a shell procedure of the reinforced software, includes steps of:
obtaining request information of the reinforced software, randomly generating a first random number according to the request information, and sending the first random number to the reinforced software;
obtaining ID information of the reinforced software according to the request information of the reinforced software, obtaining the integrity check value of the shell procedure of the reinforced software according to the ID information of the reinforced software, and performing a first cascade processing on the first random number and the integrity check value of the shell procedure to obtain a second cascade result;
calculating the second cascade result according to a second algorithm to obtain a second calculation result;
obtaining the processing result sent from the reinforced software, and identifying to obtain a first calculation result and a second random number according to the processing result; and
performing verification on the first calculation result and the second calculation result, wherein if the first calculation result is the same as the second calculation result, the verification succeeds.

Optionally, the step of performing an encryption processing on the key data and sending encrypted data generated through the encryption processing to the reinforced software if the verification succeeds, includes steps of:
obtaining the second random number that is identified according to the second cascade result;
performing calculation on the second random number and the entry address corresponding to the hidden data contained in the key data according to a third algorithm to obtain a third calculation result; and
performing an encryption processing on the third calculation result and sending encrypted data generated through the encryption processing to the reinforced software.

Optionally, the step of performing calculation on the second random number and the entry address in the plain-text software code of the reinforced software according to the third algorithm, includes a step of:
performing a XOR logical operation (exclusive-OR operation) on the second random number and the entry address in the plain-text software code of the reinforced software.

According to an embodiment of the disclosure, optionally, there is provided an authentication apparatus for reinforced software, which is applicable to a mobile terminal, including:
an obtaining module, configured to obtain, after verification of a shell procedure of reinforced software performed by a server succeeds, key data sent from the server, the key data including hidden data in a plain-text software code of the reinforced software and an entry address corresponding to the hidden data; and
a replacement module, configured to replace, according to the hidden data and the entry address, corresponding data hidden in the plain-text software code of the reinforced software stored in a memory, and load the plain-text software code.

Optionally, the authentication apparatus further includes:
a processing module, configured to calculate out an integrity check value of the shell procedure of the reinforced software, process the integrity check value of the shell procedure, and send a processing result obtained through the processing to the server to perform verification on the processing result through the server, wherein if the verification succeeds, the server encrypts the key data to generate encrypted data.

Optionally, the processing module includes:
a sending unit, configured to send request information of the reinforced software to the server, and randomly generate a first random number according to the request information of the reinforced software by the server;
a first calculation unit, configured to calculate out the integrity check value of the shell procedure of the reinforced software according to a first algorithm;
a first cascade unit, configured to obtain the first random number, and perform a first cascade processing on the first random number and the integrity check value of the shell procedure to obtain a first cascade result;
a second calculation unit, configured to perform calculation on the first cascade result according to a second algorithm to obtain a first calculation result; and
a second cascade unit, configured to perform a second cascade processing on the first calculation result and a second random number randomly generated by the reinforced software to obtain a processing result, and send the processing result to the server to perform verification on the processing result through the server, wherein if the verification succeeds, the server encrypts the key data to generate encrypted data.

Optionally, the obtaining module includes:
a decryption unit, configured to decrypt the encrypted data sent from the server after the verification of the shell procedure of the reinforced software performed by the server succeeds; and
a first obtaining unit, configured to obtain the key data sent from the server contained in decrypted data after the decryption is completed.

Optionally, the replacement module includes:
a locating unit, configured to locate a position, in the plain-text software code of the reinforced software, of the corresponding data hidden in the plain-text software code of the reinforced software according to the entry address; and
a replacement unit, configured to replace the corresponding data hidden in the plain-text software code of the reinforced software stored in the memory with the hidden data, and load the plain-text software code.

According to another aspect of the disclosure, there is also provided an authentication apparatus for reinforced software, which is applicable to a server, including:
a verification module, configured to obtain a processing result sent from the reinforced software, and perform verification on an integrity check value of a shell procedure of the reinforced software; and
an encryption module, configured to perform an encryption processing on the key data and send encrypted data generated through the encryption processing to the reinforced software if the verification succeeds, the key data including hidden data in a plain-text software code of the reinforced software and an entry address corresponding to the hidden data.

Optionally, the verification module includes:
a generation unit, configured to obtain request information of the reinforced software, randomly generate a first random number according to the request information, and send the first random number to the reinforced software;
a third cascade unit, configured to obtain ID information of the reinforced software according to the request information of the reinforced software, obtain the integrity check value of the shell procedure of the reinforced software according to the ID information of the reinforced software, and perform a first cascade processing on the first random number and the integrity check value of the shell procedure to obtain a second cascade result;
a third calculation unit, configured to calculate the second cascade result according to a second algorithm to obtain a second calculation result;
an identification unit, configured to obtain the processing result sent from the reinforced software, and identify to obtain a first calculation result and a second random number according to the processing result; and
a verification unit, configured to perform verification on the first calculation result and the second calculation result, wherein if the first calculation result is the same as the second calculation result, the verification succeeds.

Optionally, the adding module includes:
a second obtaining unit, configured to obtain the second random number that is identified according to the second cascade result;
a fourth calculation unit, configured to perform calculation on the second random number and the entry address corresponding to the hidden data contained in the key data according to a third algorithm to obtain a third calculation result; and
an encryption unit, configured to perform an encryption processing on the third calculation result and send encrypted data generated through the encryption processing to the reinforced software.

Optionally, the fourth calculation unit is configured to:
perform a XOR logical operation on the second random number and the entry address in the plain-text software code of the reinforced software when performing calculation according to the third algorithm.

The embodiments of the disclosure can have following beneficial effects:
With the authentication method for the reinforced software according to the embodiment of the disclosure, after the verification of the shell procedure of the reinforced software performed by the server succeeds, it can be possible to obtain the key data provided by the server, determine a position, in the plain-text software code, of the corresponding data hidden in the plain-text software code of the reinforced software stored in the memory according to the entry address corresponding to the hidden data in the plain-text software code of the reinforced software in the key data, and replace the corresponding data hidden in the plain-text software code of the reinforced software stored in the memory with the hidden data in the plain-text software code contained in the key data, thereby ensuring the normal operation of the reinforced software. In addition, by verifying the shell procedure of the reinforced software through the server, it can be possible to effectively prevent the shell procedure being tampered with to guarantee the integrity of the shell procedure. Therefore, the authentication method according to the embodiments of the disclosure can not only effectively identify a source of a service request but also provide an effective protection when a malicious application requests for a service, thereby significantly improving the protection effect on the reinforced software, effectively prevent attacks by an attacker and ensuring normal operation of the reinforced software.

Other aspects will become apparent upon reading and understanding the accompanying figures and detailed description.

### BRIEF DESCRIPTION OF THE DRAWINGS

FIG. 1A illustrates a flowchart of an authentication method for reinforced software according to an embodiment of the disclosure;
FIG. 1B illustrates a flowchart of an authentication method for reinforced software according to an embodiment of the disclosure;
FIG. 2 illustrates a flowchart of processing an integrity check value of a shell procedure according to an embodiment of the disclosure;
FIG. 3 illustrates a flowchart of obtaining key data according to an embodiment of the disclosure;
FIG. 4 illustrates a flowchart of replacing corresponding data hidden in a plain-text software code according to an embodiment of the disclosure;
FIG. 5 illustrates a flowchart of an authentication method for reinforced software according to an embodiment of the disclosure;
FIG. 6 illustrates a flowchart of verifying the integrity check value of the shell procedure according to an embodiment of the disclosure;
FIG. 7 illustrates a flowchart of encrypting the key data according to an embodiment of the disclosure;
FIG. 8A is a block diagram illustrating a structure of an authentication apparatus for reinforced software according to an embodiment of the disclosure;
FIG. 8B is a block diagram illustrating a structure of an authentication apparatus for reinforced software according to an embodiment of the disclosure;
FIG. 9 illustrates a block diagram of a processing module according to an embodiment of the disclosure;
FIG. 10 illustrates a block diagram of an obtaining module according to an embodiment of the disclosure;
FIG. 11 illustrates a block diagram of a replacement module according to an embodiment of the disclosure;
FIG. 12 is a block diagram illustrating a structure of an authentication apparatus for reinforced software according to an embodiment of the disclosure;
FIG. 13 illustrates a block diagram of a verification module according to an embodiment of the disclosure; and
FIG. 14 illustrates a block diagram of an encryption module according to an embodiment of the disclosure.

### DETAILED DESCRIPTION OF THE EMBODIMENTS

The embodiments of the disclosure will be described below with reference to the accompanying drawings. It should be noted that, the embodiments in the disclosure and the various manners in the embodiments may be combined with each other if there is no conflict.

### First Embodiment

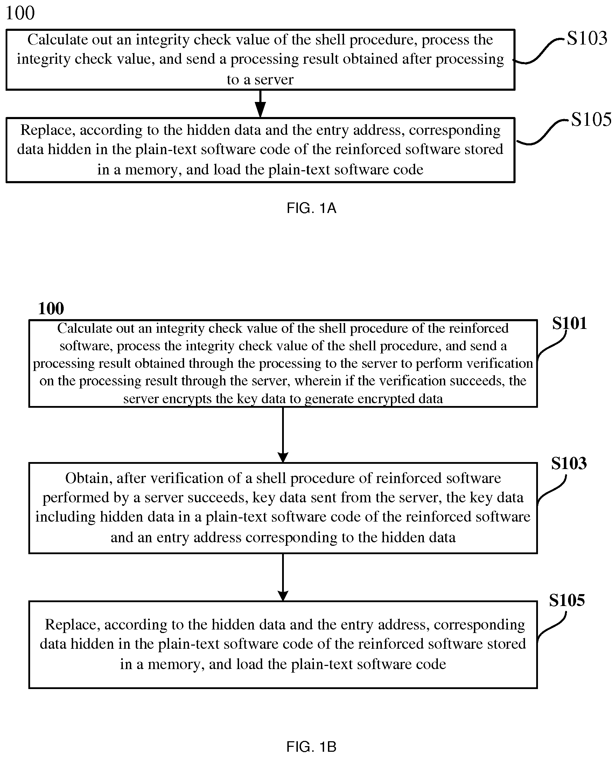

There is provided an authentication method for reinforced software in the embodiment of the disclosure, which is applicable to a mobile terminal. As shown in FIG. 1A, the authentication method 100 includes steps S103 and S105:
Step S103: obtaining, after verification of a shell procedure of a reinforced software performed by a server succeeds, key data sent from the server, the key data including hidden data in a plain-text software code of the reinforced software and an entry address corresponding to the hidden data; and
Step S105: replacing, according to the hidden data and the entry address, corresponding data hidden in the plain-text software code of the reinforced software stored in a memory, and loading the plain-text software code.

With the authentication method for the reinforced software according to the embodiment of the disclosure, it can be possible to obtain the key data provided by the server, determine a position, in the plain-text software code, of the corresponding data hidden in the plain-text software code of the reinforced software stored in the memory according to the entry address corresponding to the hidden data in the plain-text software code of the reinforced software in the key data, and then replace the corresponding data hidden in the plain-text software code of the reinforced software stored in the memory with the hidden data in the plain-text software code contained in the key data. Therefore, in the authentication method for the reinforced software according to the embodiment of the disclosure, the reinforced software needs to obtain the key data hidden by the reinforced software itself from the server, which can effectively resist attacks by an attacker, provide an excellent protection effect on the reinforced software, and ensure the normal operation of the reinforced software after obtaining the hidden key data.

Optionally, as shown in FIG. 1B, in the embodiment of the disclosure, the authentication method 100 further includes a step of:
Step S101: calculating out an integrity check value of the shell procedure of the reinforced software, processing the integrity check value of the shell procedure, and sending a processing result obtained through the processing to the server to perform verification on the processing result through the server, wherein if the verification succeeds, the server encrypts the key data to generate encrypted data.

Therefore, in this embodiment of the disclosure, before obtaining the key data, the integrity check value of the shell procedure of the reinforced software may be verified first, and the key data sent from the server can be obtained only if the verification has succeeded. In addition, by verifying the integrity check value of the shell procedure of the reinforced software through the server, it can be possible to effectively prevent the shell procedure being tampered with, thereby excellently guaranteeing the integrity of the shell procedure. Further, during the verification of the integrity check value of the shell procedure of the reinforced software, the server adopts a bidirectional challenge response manner based on a symmetrical system, which is accomplished by bidirectional cooperation between the reinforced software installed in a mobile terminal and the server, thereby avoiding the traditional channel attacks, achieving a bidirectional physical authentication and improving the protection intensity of the shell procedure of the reinforced software.

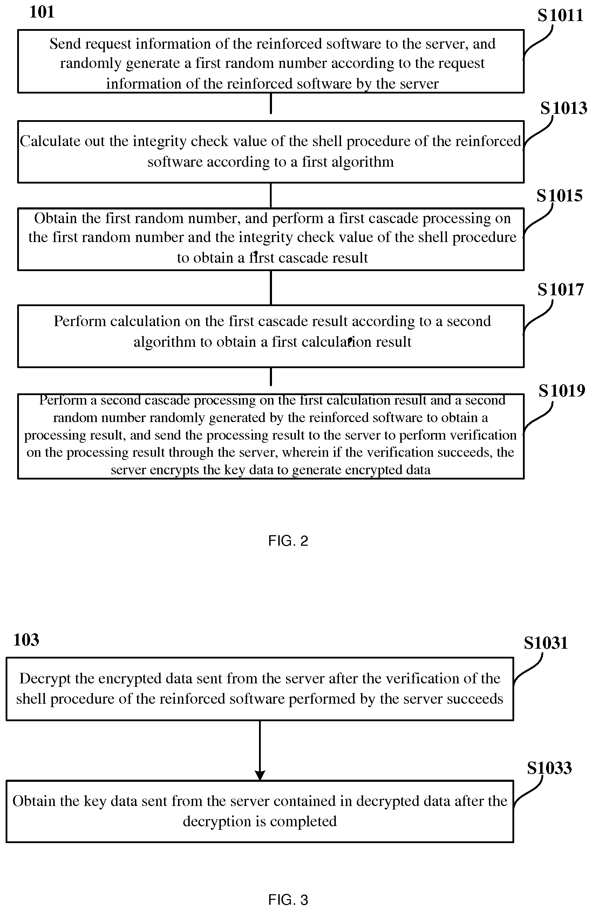

Optionally, as shown in FIG. 2, in this embodiment of the disclosure, the step (Step S101) of calculating out an integrity check value of the shell procedure of the reinforced software, processing the integrity check value of the shell procedure, and sending a processing result obtained through the processing to the server to perform verification on the processing result through the server, wherein if the verification succeeds, the server encrypts the key data to generate encrypted data, includes steps of:
Step S1011: sending request information of the reinforced software to the server, and randomly generating a first random number according to the request information of the reinforced software by the server;
Step S1013: calculating out the integrity check value of the shell procedure of the reinforced software according to a first algorithm;
Step S1015: obtaining the first random number, and performing a first cascade processing on the first random number and the integrity check value of the shell procedure to obtain a first cascade result;
Step S1017: performing calculation on the first cascade result according to a second algorithm to obtain a first calculation result; and
Step S1019: performing a second cascade processing on the first calculation result and a second random number randomly generated by the reinforced software to obtain a processing result, and sending the processing result to the server to perform verification on the processing result through the server, wherein if the verification succeeds, the server encrypts the key data to generate encrypted data.

Optionally, in the embodiment of the disclosure, during the verification of the integrity check value of the shell procedure of the reinforced software, the integrity check value of the shell procedure may be processed first, thereby effectively preventing the integrity check value of the shell procedure from being modified or damaged by the attacker in the process of sending the integrity check value of the shell procedure to the server. Therefore, the integrity check value of the shell procedure of the reinforced software is well protected.

Optionally, as shown in FIG. 3, in this embodiment of the disclosure, the step (Step S103) of obtaining, after verification of a shell procedure of a reinforced software performed by a server succeeds, key data sent from the server, includes steps of:
Step S1031: decrypting the encrypted data sent from the server after the verification of the shell procedure of the reinforced software performed by the server succeeds; and
Step S1033: obtaining the key data sent from the server contained in decrypted data after the decryption is completed.

By encrypting the key data, it can be possible to effectively prevent the key data from being acquired by the attacker in the process of sending the key data by the server, and thus the key data is well protected. Therefore, after obtaining the encrypted data, the reinforced software needs to decrypt the encrypted data to obtain the key data sent from the server.

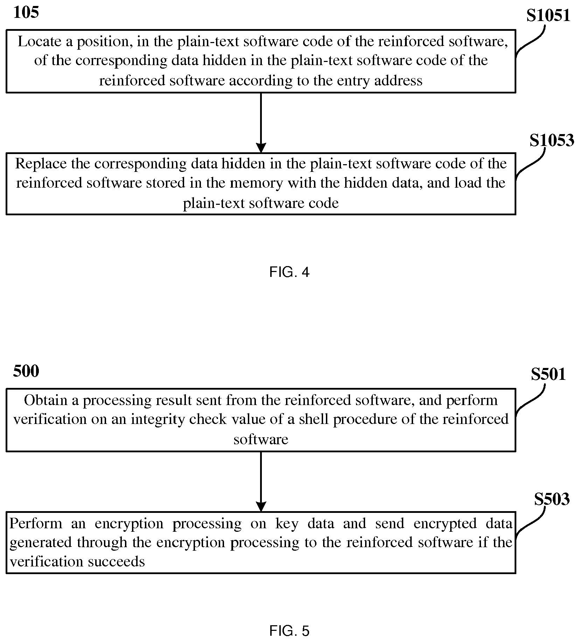

Optionally, as shown in FIG. 4, in the embodiment of the disclosure, the step (Step S105) of replacing, according to the hidden data and the entry address, corresponding data hidden in the plain-text software code of the reinforced software stored in a memory, and loading the plain-text software code, includes steps of:
Step S1051: locating a position, in the plain-text software code of the reinforced software, of the corresponding data hidden in the plain-text software code of the reinforced software according to the entry address; and
Step S1053: replacing the corresponding data hidden in the plain-text software code of the reinforced software stored in the memory with the hidden data, and loading the plain-text software code.

Therefore, after obtaining the key data provided by the server, it can be possible to determine the position, in the plain-text software code, of the corresponding data hidden in the plain-text software code of the reinforced software stored in the memory according to the entry address corresponding to the hidden data in the plain-text software code of the reinforced software in the key data, and to replace the corresponding data hidden in the plain-text software code of the reinforced software stored in the memory with the hidden data in the plain-text software code contained in the key data. Therefore, the authentication method for the reinforced software according to the embodiment of the disclosure can not only ensure the normal operation of the reinforced software, but also provide an excellent protection effect on the reinforced software while effectively resisting attacks by an attacker.

Optionally, in the embodiment of the disclosure, the integrity check value, the first random number and the second random number as set forth are all expressed in a hexadecimal format. Of course, it can be understood that the expression of the integrity check value, the first random number and the second random number is not limited in the embodiment of the disclosure.

### Second Embodiment

According to another aspect of the disclosure, there is also provided an authentication method for reinforced software, which is applicable to a server. As shown in FIG. 5, the authentication method 500 includes steps of:
Step S501: obtaining a processing result sent from the reinforced software, and performing verification on an integrity check value of a shell procedure of the reinforced software; and
Step S503: performing an encryption processing on key data and sending encrypted data generated through the encryption processing to the reinforced software if the verification succeeds, the key data including hidden data in a plain-text software code of the reinforced software and an entry address corresponding to the hidden data.

Herein, in this embodiment of the disclosure, the integrity check value of the shell procedure of the reinforced software may be verified first to ensure the integrity of the shell procedure thereof and effectively prevent the shell procedure from being tampered with. The key data can be sent to the reinforced software only if the verification has succeeded. Before the key data is sent, it is necessary to encrypt the key data, thereby ensuring the security in the process of sending the key data, effectively preventing the key data sent from the server from being captured by an attacker and providing an excellent protection effect on the key data.

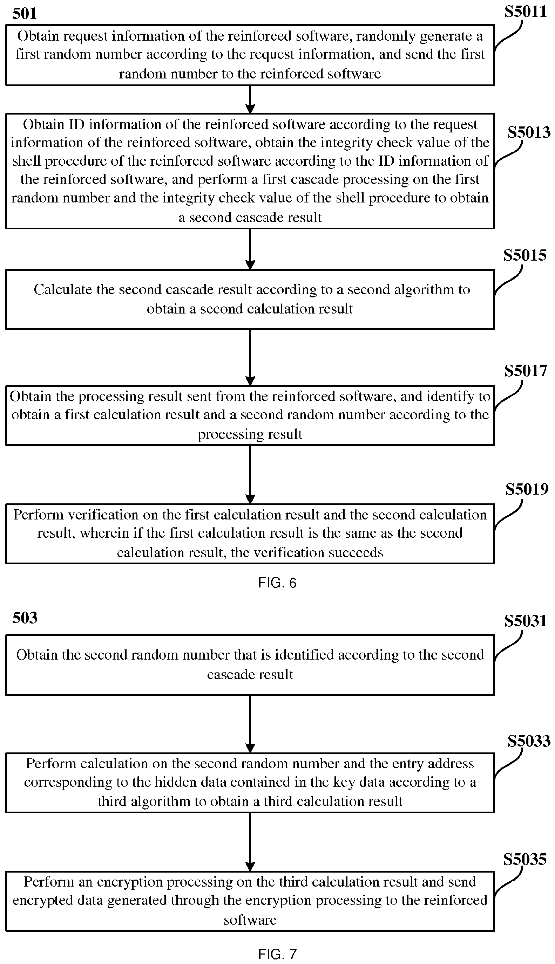

Optionally, in the embodiment of the disclosure, as shown in FIG. 6, the step (Step S501) of, according to a processing result sent from the reinforced software, performing verification on an integrity check value of a shell procedure of the reinforced software, includes steps of:
Step S5011: obtaining request information of the reinforced software, randomly generating a first random number according to the request information, and sending the first random number to the reinforced software;
Step S5013: obtaining ID (identification) information of the reinforced software according to the request information of the reinforced software, obtaining the integrity check value of the shell procedure of the reinforced software according to the ID information of the reinforced software, and performing a first cascade processing on the first random number and the integrity check value of the shell procedure to obtain a second cascade result;
Step S5015: calculating the second cascade result according to a second algorithm to obtain a second calculation result;
Step S5017: obtaining the processing result sent from the reinforced software, and identifying to obtain a first calculation result and a second random number according to the processing result; and
Step S5019: performing verification on the first calculation result and the second calculation result, wherein if the first calculation result is the same as the second calculation result, the verification succeeds.

Since the reinforced software performs a corresponding processing on the integrity check value of its shell procedure, the server needs to perform the same processing on the integrity check value of the shell procedure of the reinforced software obtained by the server and compare the first calculation result calculated by the reinforced software with the second calculation result calculated by the server. If the first calculation result is different from the second calculation result, it can be proved that the shell procedure of the reinforced software has been tampered with and attacked by an attacker. If the first calculation result is the same as the second calculation, the shell procedure of the reinforced software is not corrupted.

Therefore, the authentication method according to the embodiment of the disclosure can effectively prevent the shell procedure from being tampered with to guarantee its integrity sufficiently. Through the bidirectional cooperation between the reinforced software and the server, the verification of the integrity of the shell procedure is accomplished, thereby avoiding the traditional channel attacks and achieving a bidirectional physical authentication. Herein, the integrity check value, the first random number, and the second random number as set forth are all expressed in a hexadecimal format. Of course, it can be understood that the expression of the integrity check value, the first random number and the second random number is not limited in the embodiment of the disclosure.

Optionally, as shown in FIG. 7, in the embodiment of the disclosure, the step (Step S503) of performing an encryption processing on the key data and sending encrypted data generated through the encryption processing to the reinforced software if the verification succeeds, includes steps of:
Step S5031: obtaining the second random number that is identified according to the second cascade result;
Step S5033: performing calculation on the second random number and the entry address corresponding to the hidden data contained in the key data according to a third algorithm to obtain a third calculation result; and
Step S5035: performing an encryption processing on the third calculation result and sending encrypted data generated through the encryption processing to the reinforced software.

Optionally, in the embodiment of the disclosure, the step of performing calculation on the second random number and the entry address in the plain-text software code of the reinforced software according to the third algorithm includes: performing a XOR logical operation on the second random number and the entry address in the plain-text software code of the reinforced software.

Herein, in the embodiment of the disclosure, with encryption processing as discussed above, it can be possible to improve the protection level for the key data, ensure the security in the process of sending the key data and effectively prevent the key data sent through the server from being captured by an attacker, thereby providing an excellent protection effect on the key data.

It can be seen from the above that, the steps in the authentication method according to the embodiment of the disclosure cannot be skipped. As long as an error occurs in the authentication process, the subsequent process cannot be proceeded with. Therefore, it can be possible to effectively identify a source of a service request as well as providing an effective protection when a malicious application requests for a service, thereby significantly improving the protection effect on the reinforced software, effectively preventing attacks by an attacker and ensuring normal operation of the reinforced software.

### Third Embodiment

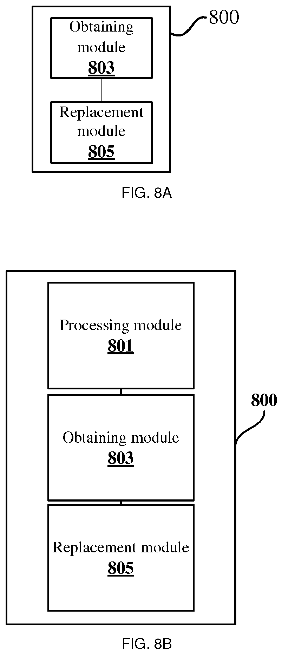

There is also provided an authentication apparatus for reinforced software in an embodiment of the disclosure, which is applicable to a mobile terminal. As shown in FIG. 8A, the authentication apparatus 800 includes:
an obtaining module 803, configured to obtain, after verification of a shell procedure of a reinforced software performed by a server succeeds, key data sent from the server, the key data including hidden data in a plain-text software code of the reinforced software and an entry address corresponding to the hidden data; and
a replacement module 805, configured to replace, according to the hidden data and the entry address, corresponding data hidden in the plain-text software code of the reinforced software stored in a memory, and load the plain-text software code.

Optionally, as shown in FIG. 8B, in this embodiment of the disclosure, the authentication apparatus 800 further includes:
a processing module 801, configured to calculate out an integrity check value of the shell procedure of the reinforced software, process the integrity check value of the shell procedure, and send a processing result obtained through the processing to the server to perform verification on the processing result through the server, wherein if the verification succeeds, the server encrypts the key data to generate encrypted data.

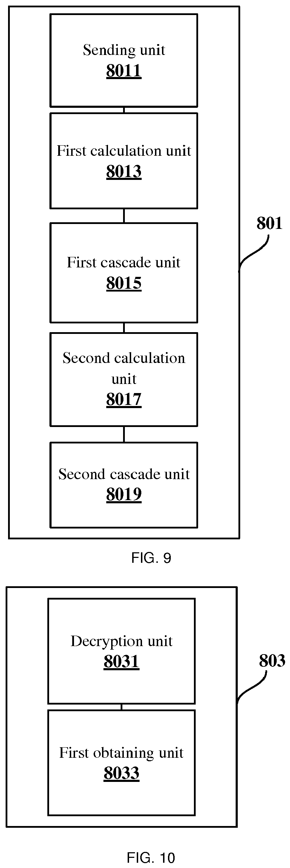

Optionally, as shown in FIG. 9, in this embodiment of the disclosure, the processing module 801 includes:
a sending unit 8011, configured to send request information of the reinforced software to the server, and randomly generate a first random number according to the request information of the reinforced software by the server;
a first calculation unit 8013, configured to calculate out the integrity check value of the shell procedure of the reinforced software according to a first algorithm;
a first cascade unit 8015, configured to obtain the first random number, and perform a first cascade processing on the first random number and the integrity check value of the shell procedure to obtain a first cascade result;
a second calculation unit 8017, configured to perform calculation on the first cascade result according to a second algorithm to obtain a first calculation result; and
a second cascade unit 8019, configured to perform a second cascade processing on the first calculation result and a second random number randomly generated by the reinforced software to obtain a processing result, and send the processing result to the server to perform verification on the processing result through the server, wherein if the verification succeeds, the server encrypts the key data to generate encrypted data.

Optionally, as shown in FIG. 10, in the embodiment of the disclosure, the obtaining module 803 includes:
a decryption unit 8031, configured to decrypt the encrypted data sent from the server after the verification of the shell procedure of the reinforced software performed by the server succeeds; and
a first obtaining unit 8033, configured to obtain the key data sent from the server contained in decrypted data after the decryption is completed.

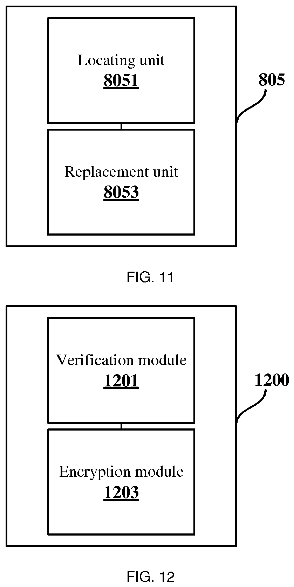

Optionally, as shown in FIG. 11, in the embodiment of the disclosure, the replacement module 805 includes:
a locating unit 8051, configured to locate a position, in the plain-text software code of the reinforced software, of the corresponding data hidden in the plain-text software code of the reinforced software according to the entry address; and
a replacement unit 8053, configured to replace the corresponding data hidden in the plain-text software code of the reinforced software stored in the memory with the hidden data, and load the plain-text software code.

By the authentication apparatus for the reinforced software according to the embodiment of the disclosure, it can be possible to obtain the key data provided by the server, determine a position, in the plain-text software code, of the corresponding data hidden in the plain-text software code of the reinforced software stored in the memory according to the entry address corresponding to the hidden data in the plain-text software code of the reinforced software in the key data, and replace the corresponding data hidden in the plain-text software code of the reinforced software stored in the memory with the hidden data in the plain-text software code contained in the key data. Therefore, the reinforced software needs to obtain the key data hidden by the reinforced software itself from the server, which can effectively resist attacks by an attacker, provide an excellent protection effect on the reinforced software, and ensure the normal operation of the reinforced software after obtaining the hidden key data.

### Fourth Embodiment

According to another aspect of an embodiment of the disclosure, there is also provided an authentication apparatus for reinforced software, which is applicable to a server. As shown in FIG. 12, the authentication apparatus 1200 includes:
a verification module 1201, configured to obtain a processing result sent from the reinforced software, and perform verification on an integrity check value of a shell procedure of the reinforced software; and
an encryption module 1203, configured to perform an encryption processing on key data and send encrypted data generated through the encryption processing to the reinforced software if the verification succeeds, the key data including hidden data in a plain-text software code of the reinforced software and an entry address corresponding to the hidden data.

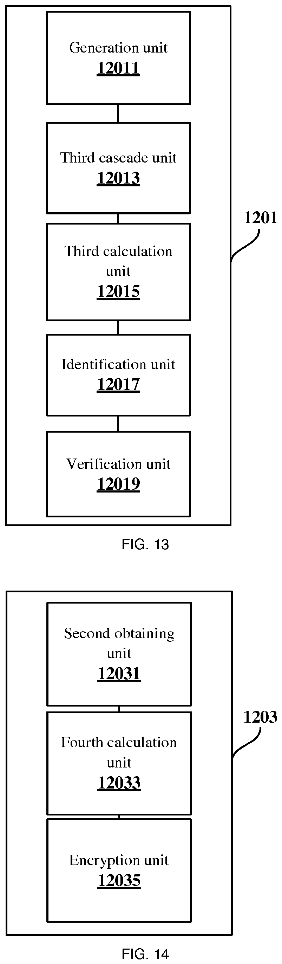

Optionally, as shown in FIG. 13, in the embodiment of the disclosure, the verification module 1201 includes:
a generation unit 12011, configured to obtain request information of the reinforced software, randomly generate a first random number according to the request information, and send the first random number to the reinforced software;
a third cascade unit 12013, configured to obtain ID (identification) information of the reinforced software according to the request information of the reinforced software, obtain the integrity check value of the shell procedure of the reinforced software according to the ID information of the reinforced software, and perform a first cascade processing on the first random number and the integrity check value of the shell procedure to obtain a second cascade result;
a third calculation unit 12015, configured to calculate the second cascade result according to a second algorithm to obtain a second calculation result;
an identification unit 12017, configured to obtain the processing result sent from the reinforced software, and identify to obtain a first calculation result and a second random number according to the processing result; and
a verification unit 12019, configured to perform verification on the first calculation result and the second calculation result, wherein if the first calculation result is the same as the second calculation result, the verification succeeds.

Optionally, as shown in FIG. 14, in the embodiment of the disclosure, the adding module 1203 includes:
a second obtaining unit 12031, configured to obtain the second random number that is identified according to the second cascade result;
a fourth calculation unit 12033, configured to perform calculation on the second random number and the entry address corresponding to the hidden data contained in the key data according to a third algorithm to obtain a third calculation result; and
an encryption unit 12035, configured to perform an encryption processing on the third calculation result and send encrypted data generated through the encryption processing to the reinforced software.

Herein, when performing calculation according to the third algorithm, the fourth calculation unit 12033 is configured to:
perform a XOR logical operation on the second random number and the entry address in the plain-text software code of the reinforced software.

The authentication apparatus according to the embodiment of the disclosure can first verify the integrity check value of the shell procedure of the reinforced software to ensure the integrity of the shell procedure of the reinforced software and effectively prevent the shell procedure from being tampered with. The key data can be sent to the reinforced software after the verification succeeds. Herein before the key data is sent, it is necessary to encrypt the key data, thereby ensuring the security in the process of sending the key data, effectively preventing the key data sent from the server from being captured by an attacker and providing an excellent protection effect on the key data.

According to an embodiment of the disclosure, there is also provided a computer readable storage medium, the computer readable storage medium storing computer executable instructions which are used to execute the above methods.

Described above are optional implementations of the embodiments of the disclosure. It should be noted that those skilled in the art may make improvements and modifications without departing from the principles described in the embodiments of the disclosure. These improvements and modifications will also fall within the scope of the disclosure.

An ordinary person skilled in the art may understand that all or part of the steps of the foregoing embodiments may be implemented by using a computer program flow. The computer program may be stored in a computer readable storage medium and is implemented on a corresponding hardware platform (such as a system, an apparatus, an equipment, a device, etc.). When executed, the computer program flow includes one or a combination of the steps of a method embodiment.

Optionally, all or part of the steps in the above embodiments may also be implemented by using integrated circuits. These steps may be separately embodied as integrated circuit modules, or some of modules or steps may be implemented as a single integrated circuit module.

The apparatuses / functional modules / functional units in the above embodiments can be implemented by using general-purpose computing device. They can be integrated in a single computing device or distributed on a network consisting of a plurality of computing devices.

When the apparatuses / functional modules / functional units in the above embodiments are implemented in the form of a software function module and is sold or used as an independent product, they may be stored in a computer-readable storage medium. The above-mentioned computer-readable storage medium may be a read-only memory, a magnetic disk, an optical disk, or the like.

### INDUSTRIAL UTILITY

The schemes of the embodiments of the disclosure can not only effectively identify a source of a service request but also provide an effective protection when a malicious application requests for a service, thereby significantly improving the protection effect on the reinforced software, effectively preventing attacks by an attacker and ensuring normal operation of the reinforced software.

## Claims

1. An authentication method for reinforced software, which is applicable to a mobile terminal, comprising steps of:
obtaining, after verification of a shell procedure of reinforced software performed by a server succeeds, key data sent from the server, the key data including hidden data in a plain-text software code of the reinforced software and an entry address corresponding to the hidden data; and
replacing, according to the hidden data and the entry address, corresponding data hidden in the plain-text software code of the reinforced software stored in a memory, and loading the plain-text software code.

2. The authentication method according to claim 1, wherein before the verification of the shell procedure of the reinforced software performed by the server succeeds, the method comprises a step of:
calculating out an integrity check value of the shell procedure of the reinforced software, processing the integrity check value of the shell procedure, and sending a processing result obtained through the processing to the server to perform verification on the processing result through the server, wherein if the verification succeeds, the server encrypts the key data to generate encrypted data.

3. The authentication method according to claim 2, wherein the step of calculating out an integrity check value of the shell procedure of the reinforced software, processing the integrity check value of the shell procedure, and sending a processing result obtained through the processing to the server, comprises steps of:
sending request information of the reinforced software to the server, receiving a first random number randomly generated according to the request information of the reinforced software by the server;
calculating out the integrity check value of the shell procedure of the reinforced software according to a first algorithm;
performing a first cascade processing on the first random number and the integrity check value of the shell procedure to obtain a first cascade result;
performing calculation on the first cascade result according to a second algorithm to obtain a first calculation result; and
performing a second cascade processing on the first calculation result and a second random number randomly generated by the reinforced software to obtain a processing result, and sending the processing result to the server.

4. The authentication method according to claim 3, wherein the step of obtaining, after verification of a shell procedure of reinforced software performed by a server succeeds, key data sent from the server, comprises steps of:
decrypting the encrypted data sent from the server after the verification of the shell procedure of the reinforced software performed by the server succeeds; and
obtaining the key data sent from the server contained in decrypted data after the decryption is completed.

5. The authentication method according to claim 1, wherein the step of replacing, according to the hidden data and the entry address, corresponding data hidden in the plain-text software code of the reinforced software stored in a memory, and loading the plain-text software code, comprises steps of:
locating a position, in the plain-text software code of the reinforced software, of the corresponding data hidden in the plain-text software code of the reinforced software according to the entry address; and
replacing the corresponding data hidden in the plain-text software code of the reinforced software stored in the memory with the hidden data, and loading the plain-text software code.

6. An authentication method for reinforced software, which is applicable to a server, comprising steps of:
obtaining a processing result sent from the reinforced software, and performing verification on an integrity check value of a shell procedure of the reinforced software; and
performing an encryption processing on key data and sending encrypted data generated through the encryption processing to the reinforced software if the verification succeeds, the key data including hidden data in a plain-text software code of the reinforced software and an entry address corresponding to the hidden data.

7. The authentication method according to claim 6, wherein the step of, according to a processing result sent from the reinforced software, performing verification on an integrity check value of a shell procedure of the reinforced software, comprises steps of:
obtaining request information of the reinforced software, randomly generating a first random number according to the request information, and sending the first random number to the reinforced software;
obtaining ID information of the reinforced software according to the request information of the reinforced software, obtaining the integrity check value of the shell procedure of the reinforced software according to the ID information of the reinforced software, and performing a first cascade processing on the first random number and the integrity check value of the shell procedure to obtain a second cascade result;
calculating the second cascade result according to a second algorithm to obtain a second calculation result;
obtaining the processing result sent from the reinforced software, and identifying to obtain a first calculation result and a second random number according to the processing result; and
performing verification on the first calculation result and the second calculation result, wherein if the first calculation result is the same as the second calculation result, the verification succeeds.

8. The authentication method according to claim 7, wherein the step of performing an encryption processing on the key data and sending encrypted data generated through the encryption processing to the reinforced software if the verification succeeds, comprises steps of:
obtaining the second random number that is identified according to the second cascade result;
performing calculation on the second random number and the entry address corresponding to the hidden data contained in the key data according to a third algorithm to obtain a third calculation result; and
performing an encryption processing on the third calculation result and sending encrypted data generated through the encryption processing to the reinforced software.

9. The authentication method according to claim 8, wherein the step of performing calculation on the second random number and the entry address in the plain-text software code of the reinforced software according to the third algorithm, comprises a step of:
performing a XOR logical operation on the second random number and the entry address in the plain-text software code of the reinforced software.

10. An authentication apparatus for reinforced software, which is applicable to a mobile terminal, comprising:
an obtaining module, configured to obtain, after verification of a shell procedure of reinforced software performed by a server succeeds, key data sent from the server, the key data comprising hidden data in a plain-text software code of the reinforced software and an entry address corresponding to the hidden data; and
a replacement module, configured to replace, according to the hidden data and the entry address, corresponding data hidden in the plain-text software code of the reinforced software stored in a memory, and load the plain-text software code.

11. The authentication apparatus according to claim 10, further comprising:
a processing module, configured to calculate out an integrity check value of the shell procedure of the reinforced software, process the integrity check value of the shell procedure, and send a processing result obtained through the processing to the server to perform verification on the processing result through the server, wherein if the verification succeeds, the server encrypts the key data to generate encrypted data.

12. The authentication apparatus according to claim 11, wherein the processing module comprises:
a sending unit, configured to send request information of the reinforced software to the server, and randomly generate a first random number according to the request information of the reinforced software by the server;
a first calculation unit, configured to calculate out the integrity check value of the shell procedure of the reinforced software according to a first algorithm;
a first cascade unit, configured to obtain the first random number, and perform a first cascade processing on the first random number and the integrity check value of the shell procedure to obtain a first cascade result;
a second calculation unit, configured to perform calculation on the first cascade result according to a second algorithm to obtain a first calculation result; and
a second cascade unit, configured to perform a second cascade processing on the first calculation result and a second random number randomly generated by the reinforced software to obtain a processing result, and send the processing result to the server to perform verification on the processing result through the server, wherein if the verification succeeds, the server encrypts the key data to generate encrypted data.

13. The authentication apparatus according to claim 12, wherein the obtaining module comprises:
a decryption unit, configured to decrypt the encrypted data sent from the server after the verification of the shell procedure of the reinforced software performed by the server succeeds; and
a first obtaining unit, configured to obtain the key data sent from the server contained in decrypted data after the decryption is completed.

14. The authentication apparatus according to claim 10, wherein the replacement module comprises:
a locating unit, configured to locate a position, in the plain-text software code of the reinforced software, of the corresponding data hidden in the plain-text software code of the reinforced software according to the entry address; and
a replacement unit, configured to replace the corresponding data hidden in the plain-text software code of the reinforced software stored in the memory with the hidden data, and load the plain-text software code.

15. An authentication apparatus for reinforced software, which is applicable to a server, comprising:
a verification module, configured to obtain a processing result sent from the reinforced software, and perform verification on an integrity check value of a shell procedure of the reinforced software; and
an encryption module, configured to perform an encryption processing on key data and send encrypted data generated through the encryption processing to the reinforced software if the verification succeeds, the key data including hidden data in a plain-text software code of the reinforced software and an entry address corresponding to the hidden data.

16. The authentication apparatus according to claim 15, wherein the verification module comprises:
a generation unit, configured to obtain request information of the reinforced software, randomly generate a first random number according to the request information, and send the first random number to the reinforced software;
a third cascade unit, configured to obtain ID information of the reinforced software according to the request information of the reinforced software, obtain the integrity check value of the shell procedure of the reinforced software according to the ID information of the reinforced software, and perform a first cascade processing on the first random number and the integrity check value of the shell procedure to obtain a second cascade result;
a third calculation unit, configured to calculate the second cascade result according to a second algorithm to obtain a second calculation result;
an identification unit, configured to obtain the processing result sent from the reinforced software, and identify to obtain a first calculation result and a second random number according to the processing result; and
a verification unit, configured to perform verification on the first calculation result and the second calculation result, wherein if the first calculation result is the same as the second calculation result, the verification succeeds.

17. The authentication apparatus according to claim 16, wherein the adding module comprises:
a second obtaining unit, configured to obtain the second random number that is identified according to the second cascade result;
a fourth calculation unit, configured to perform calculation on the second random number and the entry address corresponding to the hidden data contained in the key data according to a third algorithm to obtain a third calculation result; and
an encryption unit, configured to perform an encryption processing on the third calculation result and send encrypted data generated through the encryption processing to the reinforced software.

18. The authentication apparatus according to claim 17, wherein when performing calculation according to the third algorithm, the fourth calculation unit is configured to:
perform a XOR logical operation on the second random number and the entry address in the plain-text software code of the reinforced software.
